# EUROPÄISCHE PATENTSCHRIFT

(11) **EP 3 083 332 B1**
(45) Veröffentlichungstag und Bekanntmachung des Hinweises auf die Patenterteilung: **01.11.2017**
(21) Anmeldenummer: 14814772.1
(22) Anmeldetag: 16.12.2014
(51) Int. Cl.: B60Q 1/14, F21S 8/10

(54) **SYSTEM UND VERFAHREN ZUM AUGENSICHEREN STEUERN EINES FAHRZEUGSCHEINWERFERS**
SYSTEM AND METHOD FOR CONTROLLING A VEHICLE HEADLAMP IN A MANNER THAT IS SAFE FOR EYES
SYSTÈME ET PROCÉDÉ DE COMMANDE D'UN PROJECTEUR DE VÉHICULE POUR OBTENIR UN ÉCLAIRAGE SANS DANGER POUR LES YEUX

(30) Priorität: 20.12.2013 DE 102013021942
(43) Veröffentlichungstag der Anmeldung: 26.10.2016
(73) Patentinhaber: Audi AG, 85045 Ingolstadt (DE)
(72) Erfinder: GUT, Carsten, 85051 Ingolstadt (DE); WILHELMY, Jürgen, 91171 Greding (DE)
(74) Vertreter: Thielmann, Frank
(86) Internationale Anmeldenummer: PCT/EP2014/003361
(87) Internationale Veröffentlichungsnummer: WO 2015/090556

(56) Entgegenhaltungen:
- WO-A1-2013/096984
- DE-A1- 19 707 936
- DE-A1-102009 021 284
- DE-A1-102013 216 572

## Beschreibung

Die vorliegende Erfindung betrifft ein System und ein Verfahren zum augensicheren Steuern eines Fahrzeugscheinwerfers.

Bei Fahrten mit Kraftfahrzeugen während Dunkelheit besteht im Vergleich zu Fahrten bei zumindest ausreichender Umgebungshelligkeit bekanntermaßen ein erhöhtes Unfallrisiko. Ursache dafür ist unter anderem der eingeschränkte Sichtbereich der Fahrer, der oftmals allein auf den von den Fahrzeugscheinwerfern angeleuchteten Umgebungsbereich des Kraftfahrzeugs beschränkt ist. Auch ist die Sichtweite bei und die Helligkeit von herkömmlichen Fahrzeugscheinwerfern vergleichsweise gering, so dass unbeleuchtete Hindernisse, wie Fußgänger oder Tiere oft sehr spät erkannt werden. Daneben leiden manche Fahrer unter Einschränkungen der Sehfähigkeit bei Dämmerlicht oder Dunkelheit, oder es ist generell eine verringerte Sehleistung gegeben.

Vor diesem Hintergrund sind in den vergangenen Jahren diverse Lösungen entwickelt worden, um die Sichtverhältnisse für Fahrer bei nächtlichen Fahrten oder allgemeiner ausgedrückt bei schlechter Sicht und Dunkelheit zu verbessern. Diese Verbesserungen umfassen bspw. das automatisierte Fernlicht, das adaptive Fernlicht und eine Einstellung des Fahrlichts in Abhängigkeit von einer gegebenen Fahrsituation (Autobahnlicht, Landstraßenlicht, Kurvenlicht, etc.).

Ebenfalls bekannt sind Systeme, mit denen eine Verbesserung der Sicht eines Fahrers bei Nebel, Regen und/oder Dunkelheit erreicht werden soll, die Gebrauch machen von einer Ausstrahlung von Strahlung mit einer Wellenlänge, die vom menschlichen Auge nicht oder kaum wahrgenommen wird, in einen Umgebungsbereich des Kraftfahrzeugs, Erfassung von Bildern durch eine Kameraeinrichtung, deren Sensorik für die ausgestrahlte Wellenlänge empfindlich ist, und Darstellen der erhaltenen oder von aufbereiteten Bildern auf einer Anzeigeeinrichtung des Kraftfahrzeugs, bspw. einem Bildschirm oder einem Head-Up-Display. Als Strahlung, die von einem menschlichen Auge nicht oder kaum wahrgenommen werden kann, kommt hierbei nahes Infrarot-Licht oder UV-Licht zum Einsatz.

Eine weitere Entwicklung geht dahin, dem Fahrer ein möglichst helles und/oder tageslichtähnliches Fahrlicht zur Verfügung zu stellen. Diese Entwicklungen umfassen bspw. Halogen-Lampen mit einem im Vergleich zu herkömmlichen Halogen-Lampen höheren Lichtstrom und/oder einer verbesserten Lichtfarbe, Xenon-Scheinwerfer und LED-Scheinwerfer.

Die WO 2013/096984 A1 beschreibt eine Vorrichtung und ein Verfahren zur Sicherheitsabschaltung von zumindest einer Laserlichtquelle zumindest eines Scheinwerfers in einem Kraftfahrzeug, wobei die Sicherheitsvorrichtung ein fahrzeugseitiges Teilsystem sowie ein scheinwerferseitiges Teilsystem aufweist, wobei die beiden Teilsysteme über eine Schnittstelle miteinander in Verbindung stehen und zum Austausch sicherheitsrelevanter Signale eingerichtet sind, eine Überwachungsanordnung dazu eingerichtet ist, bei Vorliegen sicherheitskritischer Zustände Steuersignale abzugeben und eine Scheinwerferansteuerung dazu eingerichtet ist, bei Zuführung solcher Steuersignale die zumindest eine Laserlichtquelle abzuschalten/abgeschaltet zu halten.

Aus der DE 10 2009 021 284 A1 ist ein mit einem Umgebungssensor ausgestattetes Kraftfahrzeug bekannt. Der Umgebungssensor sendet Signale aus und empfängt reflektierte Signale. Um Einflüsse auf die Umwelt und insbesondere auf Personen zu verringern, ist eine Sendeleistung des Umgebungssensors geschwindigkeitsabhängig regelbar. Weiterhin ist ein entsprechendes Verfahren zum Ansteuern des Umgebungssensors angegeben.

Und die DE 197 07 936 A1 hat eine Vorrichtung zum Bestimmen eines Abstandes eines Hindernisses zu einem Fahrzeug zum Gegenstand mit einem optischen Abstandssensor, der eine Sendeeinrichtung zum Aussenden von Sendesignalen und eine Empfangseinrichtung zum Empfang der an Hindernissen reflektierten Empfangssignale umfasst, und mit einer Auswerteeinrichtung zur Ermittlung des Abstandes zwischen dem Abstandssensor und dem Hindernis aus den Sende- und Empfangssignalen sowie ein entsprechendes Verfahren zum Bestimmen eines Abstandes eines Hindernisses zu einem Fahrzeug. Für eine Erhöhung der Augensicherheit ist vorgesehen, die Sendeleistung der Sendeeinrichtung fahrgeschwindigkeitsabhängig zu steuern.

Es ist Aufgabe der vorliegenden Erfindung ein augensicher betreibbares System mit einem Fahrzeugscheinwerfer, das sehr gute Sichtbedingungen für einen Fahrer eines Kraftfahrzeugs bei schlechten Sichtbedingungen bietet, und ein Verfahren zum augensicheren Steuern des Systems zur Verfügung zu stellen.

Diese Aufgaben werden gelöst durch das System gemäß 1 und das Verfahren gemäß Anspruch 5. Vorteilhafte Ausgestaltungen und Weiterbildungen des Systems und des Verfahrens sind Gegenstand der Unteransprüche.

Gemäß der vorliegenden Erfindung wird ein System mit einem Fahrzeugscheinwerfer zur Beleuchtung eines Umfelds eines Kraftfahrzeugs und einem Steuergerät vorgeschlagen, wobei der Fahrzeugscheinwerfer wenigstens eine Lichtquelle, die dazu eingerichtet ist, eine für Menschen sichtbare Strahlung im Wellenlängenbereich von 360 nm bis 830 nm, bevorzugt von 380 nm bis 780 nm, noch bevorzugter von 400 nm bis 760 nm, mit einer Leuchtdichte von 100 cd/mm² oder größer zu erzeugen, und ein Scheinwerfergehäuse aufweist, wobei wenigstens eine Wandung des Scheinwerfergehäuses für die sichtbare Strahlung transparent ist.

Das System ist dadurch gekennzeichnet, dass das Steuergerät dazu eingerichtet ist, in einem Einbauzustand des Fahrzeugscheinwerfers die Leuchtdichte der sichtbaren Strahlung der wenigstens einen Lichtquelle bei - Unterschreiten einer vorgegebenen ersten Grenzgeschwindigkeit des Kraftfahrzeugs,
von einer höheren Leuchtdichte von 100 cd/mm² oder größer auf eine niedrigere Leuchtdichte im Bereich von kleiner 100 cd/mm² und 60 cd/mm² zu verringern oder zu begrenzen, wobei
das Steuergerät dazu eingerichtet ist, zur Ermittlung des Unterschreitens der ersten Grenzgeschwindigkeit des Kraftfahrzeugs die sich aus dem Tachosignal ergebende Geschwindigkeit mit Daten eines satellitengestützten Navigationssystems, wenigstens eines Beschleunigungssensors und/oder mit Daten eines elektronischen Stabilitätsprogramms abzugleichen und so die Güte der ermittelten Geschwindigkeit des Kraftfahrzeugs zu verbessern oder die Werte des Tachosignals zu verifizieren.

Das erfindungsgemäße System macht Gebrauch von Fahrzeugscheinwerfern, die in der Lage sind, sichtbare Strahlung (sichtbares Licht) als Abblendlicht und/oder als Fernlicht mit einer maximalen Leuchtdichte abzustrahlen, der höher ist als die Leuchtdichte der derzeit erhältlichen Fahrzeugscheinwerfer, beispielsweise um den Faktor 1,5, 2, 3, 4, 5, 6, 7, 8, 9, 10 oder größer, d.h. mit einer maximalen Leuchtdichte von etwa 100 cd/mm², 150 cd/mm², 200 cd/mm², 300 cd/mm², 400 cd/mm², 500 cd/mm², 600 cd/mm², 700 cd/mm², 800 cd/mm², 900 cd/mm², 1000 cd/mm² oder größer. Diese Art von Fahrzeugscheinwerfer wird in der vorliegenden Anmeldung auch als "Hochlumineszenz-Fahrzeugscheinwerfer" bezeichnet. Die höhere Leuchtdichte kann einen der genannten oben Werte aufweisen, oder einen beliebigen Wert zwischen den angegebenen Werten. Die niedrigere Leuchtdichte beträgt erfindungsgemäß kleiner 100cd/mm², bspw. 95 cd/mm², 90 cd/mm², 85 cd/mm², 80 cd/mm², 75 cd/mm², 70 cd/mm², 65 cd/mm², 60 cd/mm². Bei Hochlumineszenz-Fahrzeugscheinwerfern kann es unter bestimmten Bedingungen zu einer photobiologischen Gefährdung eines Auges kommen. Diese Gefahr wird durch die vorliegende Erfindung verringert oder sogar vermieden.

Gemäß einer ersten vorteilhaften Weiterbildung des Systems ist das Steuergerät dazu eingerichtet, die niedrigere Leuchtdichte der sichtbaren Strahlung der wenigstens einen Lichtquelle derart zu steuern oder zu begrenzen, dass der Fahrzeugscheinwerfer bei Abstrahlung von sichtbarer Strahlung mit der niedrigeren Leuchtdichte an jedem beliebigen Punkt der Außenseite der für die sichtbare Strahlung transparenten Wandung die Grenzwerte für Dauerstrich-Lampen gemäß Risikogruppe 2, bevorzugt gemäß Risikogruppe 1 der DIN EN 62471 in der Fassung vom März 2009 einhält.

Gemäß einer zweiten vorteilhaften Weiterbildung des System weist die wenigstens eine Lichtquelle als Lichterzeugungseinrichtung wenigstens eine lichtemittierende Diode, einen Gasentladungsbrenner und/oder eine Laser-Diode auf.

Gemäß noch einer weiteren vorteilhaften Weiterbildung des Systems ist vorgesehen, dass das Steuergerät dazu eingerichtet ist, bei einer Geschwindigkeit des Kraftfahrzeugs in einem Bereich zwischen der ersten Grenzgeschwindigkeit und einer zweiten Grenzgeschwindigkeit, die höher ist als die erste Grenzgeschwindigkeit, die Leuchtdichte der wenigstens einen Lichtquelle in Abhängigkeit der Geschwindigkeit zu regeln, derart, dass die Leuchtdichte bei einer höheren Geschwindigkeit größer ist als bei einer niedrigeren Geschwindigkeit und ab einem Erreichen der zweiten Grenzgeschwindigkeit eine maximale Leuchtdichte gegeben ist.

Das Steuergerät kann auch dazu eingerichtet sein, zur Ermittlung eines Störungszustands des Kraftfahrzeugs oder einer fahrzeugseitigen Einrichtung Daten von wenigstens einer fahrzeugseitigen Einrichtung auszuwerten, und/oder die Lichtquelle in Abhängigkeit von der Art des Störungszustands auch völlig zu deaktivieren.

Ist das Steuergerät dazu eingerichtet, die Lichtquelle in Abhängigkeit von der Art des Störungszustands des Kraftfahrzeugs oder einer fahrzeugseitigen Einrichtung auch völlig zu deaktivieren kann das Steuergerät weiter dazu eingerichtet sein, die Lichtquelle erst wieder zu aktivieren, wenn an das Steuergerät ein Signal übertragen wurde, mit dem die Beseitigung des Störungszustands signalisiert wird.

Die vorliegende Erfindung umfasst auch ein Verfahren zum Steuern eines Fahrzeugscheinwerfers zur Beleuchtung eines Umfelds eines Kraftfahrzeugs mit einem Steuergerät, wobei der Fahrzeugscheinwerfer wenigstens eine Lichtquelle, die dazu eingerichtet ist, für einen Menschen sichtbare Strahlung im Wellenlängenbereich von 360 nm bis 830 nm, bevorzugt von 380 nm bis 780 nm, noch bevorzugter von 400 nm bis 760 nm, mit einer Leuchtdichte von 100 cd/mm² oder größer zu erzeugen, und ein Scheinwerfergehäuse aufweist, wobei wenigstens eine Wandung des Scheinwerfergehäuses die sichtbare Strahlung transparent ist.

Das erfindungsgemäße Verfahren umfasst die folgenden Schritte: Ermitteln der Geschwindigkeit des Kraftfahrzeugs, wobei zur Ermittlung der Geschwindigkeit des Kraftfahrzeugs die sich aus dem Tachosignal ergebende Geschwindigkeit mit Daten eines satellitengestützten Navigationssystems, wenigstens eines Beschleunigungssensors und/oder mit Daten eines elektronischen Stabilitätsprogramms abgeglichen wird und so die Güte der ermittelten Geschwindigkeit des Kraftfahrzeugs verbessert oder die Werte des Tachosignals verifiziert werden, und
Verringern oder Begrenzen der Leuchtdichte der sichtbaren Strahlung der wenigstens einen Lichtquelle durch das Steuergerät von einer höheren Leuchtdichte von 100 cd/mm² oder größer auf eine niedrigere Leuchtdichte im Bereich von kleiner 100 cd/mm² und 60 cd/mm², wenn - eine vorgegebene erste Grenzgeschwindigkeit des Kraftfahrzeugs unterschritten wird.

Gemäß einer ersten vorteilhaften Weiterbildung des Verfahrens wird die niedrigere Leuchtdichte der sichtbaren Strahlung der wenigstens einen Lichtquelle derart verringert oder begrenzt, dass der Fahrzeugscheinwerfer bei Abstrahlung von sichtbarer Strahlung mit der niedrigeren Leuchtdichte an jedem beliebigen Punkt der Außenseite der für die sichtbare Strahlung transparenten Wandung die Grenzwerte für Dauerstrich-Lampen gemäß Risikogruppe 2, bevorzugt gemäß Risikogruppe 1 der DIN EN 62471 in der Fassung vom März 2009 einhält.

Weitere Ausführungsformen und Weiterbildungen des Verfahrens, die Gegenstand der vorliegenden Erfindung und Anmeldung sind, ergeben sich aus der Beschreibung des erfindungsgemäßen Systems, seinen Ausführungsformen und Weiterbildungen, die für das erfindungsgemäße Verfahren entsprechend gelten.

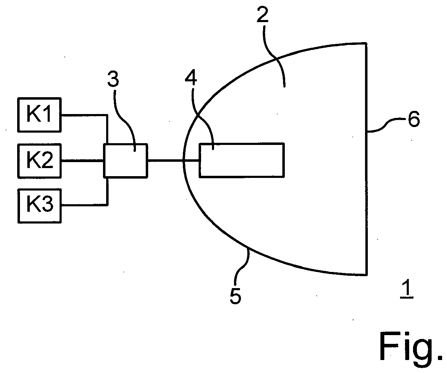

Die vorliegende Erfindung wird anhand der beigefügten Zeichnung näher erläutert.

Die Figur zeigt in rein schematischer Ansicht ein Beispiel eines erfindungsgemäßen Systems.

Die Darstellungen in der Figur sind rein schematisch und nicht maßstabsgerecht.

Die nachfolgend erläuterten Ausführungsbeispiele stellen bevorzugte Ausführungsformen der vorliegenden Erfindung dar. Die vorliegende Erfindung ist selbstverständlich nicht auf diese Ausführungsformen beschränkt.

Wie in der Figur schematisch dargestellt ist, weist das erfindungsgemäße System 1 einen Fahrzeugscheinwerfer 2 zur Beleuchtung eines Umfelds eines Kraftfahrzeugs und ein Steuergerät 3 auf, wobei der Fahrzeugscheinwerfer 2 wenigstens eine Lichtquelle 4, die dazu eingerichtet ist, eine für Menschen sichtbare Strahlung im Wellenlängenbereich von 360 nm bis 830 nm, bevorzugt von 380 nm bis 780 nm, noch bevorzugter von 400 nm bis 760 nm, mit einer Leuchtdichte von 100 cd/mm² oder größer zu erzeugen, und ein Scheinwerfergehäuse 5 aufweist, wobei wenigstens eine Wandung 6 des Scheinwerfergehäuses 5 für die sichtbare Strahlung transparent ist.

Das System 1 ist dadurch gekennzeichnet, dass das Steuergerät 3 dazu eingerichtet ist, in einem Einbauzustand des Fahrzeugscheinwerfers 2 die Leuchtdichte der sichtbaren Strahlung der wenigstens einen Lichtquelle 4 bei - Unterschreiten einer vorgegebenen ersten Grenzgeschwindigkeit K1 des Kraftfahrzeugs,
von einer höheren Leuchtdichte von 100 cd/mm² oder größer auf eine niedrigere Leuchtdichte im Bereich von kleiner 100 cd/mm² und 60 cd/mm² zu verringern oder zu begrenzen.

Das Steuergerät 3 kann weiter auch dazu eingerichtet sein, in einem Einbauzustand des Fahrzeugscheinwerfers 2 die Leuchtdichte der sichtbaren Strahlung der wenigstens einen Lichtquelle 4 bei
- einem Störungszustand K2 des Kraftfahrzeugs oder einer fahrzeugseitigen Einrichtung, und/oder
- einem Wartungsmodus K3 des Kraftfahrzeugs
   von einer höheren Leuchtdichte von 100 cd/mm² oder größer auf eine niedrigere Leuchtdichte von kleiner 100 cd/mm² zu verringern oder zu begrenzen.

Für den Spektralbereich der für einen Menschen sichtbaren Strahlung existieren keine genauen Grenzen, da diese von dem Betrag der Strahlungsleistung, die die Netzhaut erreicht, und von der Augenempfindlichkeit des Beobachters abhängen. Die untere Grenze wird im Allgemeinen zwischen 360 nm und 400 nm, die obere Grenze zwischen 760 nm und 830 nm angenommen.

Wie oben bereits erwähnt, macht das erfindungsgemäße System 1 Gebrauch von Fahrzeugscheinwerfern 2, die in der Lage sind, sichtbare Strahlung (sichtbares Licht) als Abblendlicht und/oder Fernlicht mit einer maximalen Leuchtdichte abzustrahlen, der höher ist als die Leuchtdichte von derzeit erhältlichen Fahrzeugscheinwerfern, beispielsweise um den Faktor 1,5, 2, 3, 4, 5, 6, 7, 8, 9, 10 oder größer., d.h. mit einer Leuchtdichte von etwa 100 cd/mm², 150 cd/mm², 200 cd/mm², 300 cd/mm², 400 cd/mm², 500 cd/mm², 600 cd/mm², 700 cd/mm², 800 cd/mm², 900 cd/mm², 1000 cd/mm² oder größer.

Derzeit erhältliche Scheinwerfer für Kraftfahrzeuge weisen eine Leuchtdichte im Bereich von etwa 60 cd/mm² bis etwa 90 cd/mm² auf. Diese Leuchtdichte wird bspw. von Xenon-Lichtsystemen oder LED-Scheinwerfern erreicht. Es besteht jedoch das Bedürfnis danach, die von Fahrzeugscheinwerfern abstrahlbare Leuchtdichte weiter zu steigern, bspw. bis in den oben genannten Bereich hinein. Bei derartigen Hochlumineszenz-Fahrzeugscheinwerfern kann es unter bestimmten Bedingungen zu einer photobiologischen Gefährdung des Auges eines Betrachters kommen, wenn dieser in den leuchtenden Scheinwerfer sieht.

Die Art und Weise, wie durch die wenigstens eine Lichtquelle 4 Licht erzeugt wird, unterliegt erfindungsgemäß keiner besonderen Beschränkung. In bevorzugter Weise weist die wenigstens eine Lichtquelle 4 wenigstens eine lichtemittierende Diode, einen Gasentladungsbrenner und/oder eine Laser-Diode auf.

Insbesondere mit Hilfe von Laser-Dioden lassen sich hohe Leuchtdichten erreichen. Je nach Anforderung sind Laser-Dioden mit unterschiedlicher Wellenlänge des abgestrahlten Lichts verfügbar, vom ultraviolettem Bereich, über den für einen Menschen sichtbaren Bereich bis hin zum infraroten Bereich. Mittels eines Konverters, bspw. in Form von Phosphor oder einer Phosphorverbindung kann bspw. von einer Laser-Diode abgestrahltes Ultraviolettlicht in weißes Licht umgewandelt werden.

Da mehrere Laser-Dioden auch auf einem Chip gemeinsam betrieben werden können, steht auf kleinem Bauraum eine große Bandbreite an emittierter Lichtleistung zur Verfügung. Aufgrund der sehr kleinflächigen Abstrahlcharakteristik von Laser-Dioden können auch Optiken, die zur Aufweitung und Ablenkung des Lichtstrahls verwendet werden, sowie Reflektoren sehr klein ausgeführt sein. Auch kann das Licht von mehreren Laser-Dioden sehr gut fokussiert werden (Strahlkombinierung mittels Linsen, Gitter, etc.), d.h. bei Licht von mehreren Laser-Dioden ist eine sehr gute Skalierbarkeit gegeben. Damit ergibt sich insgesamt eine bspw. im Vergleich zu herkömmlichen Xenon-Scheinwerfern sehr kleine Lichtabstrahlfläche mit einer entsprechend hohen Leuchtdichte.

Je nach Bauweise können bei dem Hochlumineszenz-Scheinwerfer nur eine kleine, quasi punktförmige Lichtaustrittsfläche vorhanden sein (bspw. bei nur einer Lichtquelle oder der Fokussierung des Lichts von mehreren Lichtquellen), es können mehrere, quasi punktförmige Lichtaustrittsflächen vorhanden sein (bspw. bei einer Mehrzahl an voneinander getrennt angeordneten Lichtquellen, ohne dass deren Licht fokussiert wird) oder es kann/können die punktförmige(n) Lichtaustrittsfläche(n) beweglich sein (bspw. bei einer in schneller Abfolge erfolgenden Ablenkung des Lichts von wenigstens einer Lichtquelle).

Erfindungsgemäß ist auch die Bau- und/oder Funktionsweise des Fahrzeugscheinwerfers 2 nicht besonders beschränkt und es kann sich beispielsweise um einen Fahrzeugscheinwerfer 2 vom Reflexionstyp oder um einen vom Projektionstyp handeln.

Eine der Bedingungen, bei denen eine photobiologische Gefährdung eines Auges eines Betrachters eintreten kann, ist gegeben, wenn ein Kraftfahrzeug mit einem eingeschalteten Hochlumineszenz-Fahrzeugscheinwerfer 2 steht oder sich nur vergleichsweise langsam bewegt. In einem solchen Fall ergibt sich ein statischer (d.h. sich nicht verändernder) oder nur sehr langsam verändernder Bereich der Ausleuchtung durch den Fahrzeugscheinwerfer 2. In diesen Ausleuchtbereich können bspw. Kinder, deren Augenhöhe vergleichsweise niedrig ist, hineinsehen. Aber auch die Augen von Erwachsenen können gefährdet sein, bspw. wenn das Kraftfahrzeug erhöht steht.

Daher ist erfindungsgemäß vorgesehen, dass das Steuergerät 3 des Systems 1 dazu eingerichtet ist, bei Unterschreiten einer vorgegebenen ersten Grenzgeschwindigkeit K1 des Kraftfahrzeugs die Leuchtdichte der sichtbaren Strahlung der wenigstens einen Lichtquelle 4 auf eine niedrigere Leuchtdichte zu verringern oder zu begrenzen.

Für das Kriterium der ersten Grenzgeschwindigkeit kann jede geeignete Geschwindigkeit gewählt werden, bspw. 100 km/h oder kleiner, bspw. 95 km/h, 90 km/h, 85 km/h, 80 km/h, 75 km/h, 70 km/h. Für die Wahl der ersten Grenzgeschwindigkeit kann die Überlegung mit einbezogen werden, ab welcher Geschwindigkeit die Wahrscheinlichkeit, dass sich ein Mensch innerhalb eines zumindest potentiell gefährlichen Grenzabstands zu dem Fahrzeugscheinwerfer 2 aufhält, nur noch vernachlässigbar gering ist.

Es kann nämlich davon ausgegangen werden, dass je schneller sich ein Kraftfahrzeug bewegt, umso geringer die Wahrscheinlichkeit ist, dass sich ein Mensch in einem Grenzabstand von weniger als 1 m, 1,5 m, 2 m, 2,5 m oder 3 m vor dem Fahrzeugscheinwerfer 2 aufhält. Da das Licht aus dem Fahrzeugscheinwerfer 2 nicht stark fokussiert austritt, sondern zur Ausleuchtung eines Bereichs vor dem Fahrzeug einen gewissen horizontalen und vertikalen Abstrahlwinkel aufweist, nimmt die Beleuchtungsstärke pro Flächeneinheit ab dem Fokuspunkt mit zunehmenden Abstand vom Fahrzeugscheinwerfer 2 ab, so dass außerhalb eines der oben angegebenen Grenzabstände auch bei maximaler Leuchtdichte des Hochlumineszenz-Fahrzeugscheinwerfers 2 keine Gefahr einer photobiologischen Gefährdung eines Auges eines Menschen gegeben ist. Der jeweilige Grenzabstand und damit auch die erste Grenzgeschwindigkeit wird selbstverständlich in Abhängigkeit von der spektralen Zusammensetzung der Strahlung, der Stärke des Lichtstroms der sichtbaren Strahlung und den Abstrahlwinkeln, etc., gewählt sein.

Auch kann davon ausgegangen werden, dass sich die Einwirkungsdauer auf ein Auge mit zunehmender Geschwindigkeit des Kraftfahrzeugs reduziert, da eine ständige Positionsänderung des Kraftfahrzeugs bzw. des durch den Fahrzeugscheinwerfer 2 ausgeleuchteten Bereichs zu erwarten ist.

Für die Ermittlung des Unterschreitens der ersten Grenzgeschwindigkeit ist erfindungsgemäß vorgesehen, dass das Steuergerät 3 dazu eingerichtet ist, die sich aus dem Tachosignal ergebende Geschwindigkeit mit Daten eines satellitengestützten Navigationssystems, wenigstens eines Beschleunigungssensors (Gierratensensors) und/oder mit Daten eines elektronischen Stabilitätsprogramms abzugleichen. Hierdurch lässt sich die Güte der ermittelten Geschwindigkeit des Kraftfahrzeugs verbessern bzw. die Werte des Tachosignals verifizieren.

Beispielsweise kann es bei einem zu geringen Reibungskoeffizienten zwischen Untergrund und Reifen zu einem Durchdrehen der Räder kommen (bspw. wenn der Fahrer ein elektronisches Stabilitätsprogramm deaktiviert hat und ein matschiger Untergrund gegeben ist, bei Eis- und Schnee, etc.). Ein weiteres Beispiel für eine Situation, bei der das Tachosignal eine vermeintliche, tatsächlich aber nicht gegebene Geschwindigkeit eines Kraftfahrzeugs suggeriert, wäre ein Kraftfahrzeug auf einem Rollenprüfstand. In allen diesen Fällen könnte das Tachosignal eine Geschwindigkeit des Kraftfahrzeugs suggerieren, bei der ein gefahrloses Steuern (Betreiben) der Hochlumineszenz-Fahrzeugscheinwerfer 2 mit hoher (d.h. 100 cd/mm² oder höher) oder gar maximaler Leuchtdichte möglich erscheint.

Da die tatsächliche Geschwindigkeit des Kraftfahrzeugs in diesen oder ähnlichen Fällen jedoch geringer ist als die durch das Tachosignal suggerierte, kann durch einen Abgleich des Tachosignals mit den Daten eines Satellitengestützten Navigationssystems, wenigstens eines Beschleunigungssensors und/oder mit Daten eines elektronischen Stabilitätsprogramms die tatsächliche Geschwindigkeit des Kraftfahrzeugs ermittelt werden und danach die Leuchtdichte der sichtbaren Strahlung des Fahrzeugscheinwerfers 2 augensicher geregelt (verringert oder begrenzt) werden.

Auch kann vorgesehen sein, dass bei einem deaktivierten elektronischen Stabilitätsprogramm die Leuchtdichte des Fahrzeugscheinwerfers 2 auf die niedrigere Leuchtdichte begrenzt oder verringert ist.

In vorteilhafter Weise kann das Steuergerät 3 auch dazu eingerichtet sein, bei einer Geschwindigkeit des Kraftfahrzeugs in einem Bereich zwischen der ersten Grenzgeschwindigkeit und einer zweiten Grenzgeschwindigkeit, die höher ist als die erste Grenzgeschwindigkeit, die Leuchtdichte der wenigstens einen Lichtquelle 4 in Abhängigkeit der Geschwindigkeit zu regeln, derart, dass die Leuchtdichte bei einer höheren Geschwindigkeit größer ist als bei einer niedrigeren Geschwindigkeit und ab einem Erreichen der zweiten Grenzgeschwindigkeit eine maximale Leuchtdichte gegeben ist.

Hierdurch lässt sich bspw. eine kontinuierliche Erhöhung der Leuchtdichte mit zunehmender Geschwindigkeit des Fahrzeugs erreichen, was zum einen die Gefahr für eine mögliche photobiologischen Gefährdung von außenstehenden Personen weiter verringert, aber auch dem Fahrer des Kraftfahrzeugs eine leichtere Adaption seiner Augen an die sich ändernde Leuchtdichte bzw. Beleuchtungsstärke ermöglicht, als wenn die Leuchtdichte abrupt von einer niedrigeren zweiten zu einer höheren ersten Leuchtdichte ansteigen würde. Gleiches gilt für den umgekehrten Fall einer abrupten Erniedrigung der Leuchtdichte von einer hohen oder gar maximalen Leuchtdichte auf eine niedrigere Leuchtdichte.

Die Größe der zweiten Grenzgeschwindigkeit kann jeden geeigneten Wert aufweisen, so lange die zweite Grenzgeschwindigkeit größer ist als die gewählte erste Grenzgeschwindigkeit. Die Differenz zwischen der ersten und zweiten Grenzgeschwindigkeit kann bspw. 5 km/h, 10 km/h, 15 km/h, 20 km/h, 25 km/h, 30 km/h, 35 km/h, 40 km/h, 45 km/h, 50 km/h oder größer sein. Auch kann selbstverständlich für die zweite Grenzgeschwindigkeit eine absolute Geschwindigkeit (bspw. 105 km/h, 110 km/h, 115 km/h, 120 km/h, 125 km/h, 130 km/h, 135 km/h, 140 km/h oder größer) gewählt sein.

Die Steuerung des Hochlumineszenz-Scheinwerfers kann auch mit einem Fernlicht-Assistenzsystem (FLA) gekoppelt sein bzw. das Steuergerät des erfindungsgemäßen Systems kann auch das Steuergerät sein, durch den ein Fernlicht-Assistenzsystem realisiert wird.

Bei einem Fernlicht-Assistenzsystem wird ein adaptives Fernlicht in Abhängigkeit von der Geschwindigkeit des Fahrzeugs und dem Erkennen von anderen Verkehrsteilnehmern im Ausleuchtbereich der Fahrzeugscheinwerfer gesteuert.

Bspw. kann ein Fernlicht-Assistenzsystem ab einer Geschwindigkeit des Fahrzeugs von 50 km/h oder höher aktiv sein. Durch geeignete Sensoriken (z.B. Kameras) und Auswertungseinrichtungen für die von den Sensoriken gelieferten Daten können von dem Fernlicht-Assistenzsystem andere Verkehrsteilnehmer im Ausleuchtbereich der Fahrzeugscheinwerfer erkannt und das Fernlicht so gesteuert werden, dass erkannte Verkehrsteilnehmer nicht geblendet werden.

Gemäß der vorliegenden Erfindung kann von einem derartigen Fernlicht-Assistenzsystem auch die Steuerung des Hochlumineszenz-Scheinwerfers, bei dem es sich um eine von dem herkömmlichen Scheinwerfersystem unabhängige, zusätzliche Einrichtung handeln kann, übernommen werden. Hat das Fahrzeug die erste Grenzgeschwindigkeit (bspw. 80 km/h) überschritten und wird vom Fernlicht-Assistenzsystem kein anderer Verkehrsteilnehmer im Ausleuchtbereich des Hochlumineszenz-Scheinwerfers festgestellt, kann durch das Fernlicht-Assistenzsystem der Hochlumineszenz-Scheinwerfer zugeschaltet werden oder die Leuchtdichte des Hochlumineszenz-Scheinwerfers von einer niedrigeren Leuchtdichte auf eine höhere, gegebenenfalls maximale Leuchtdichte erhöht werden. In ähnlicher Weise kann durch das Fernlicht-Assistenzsystem auch die Steuerung des Hochlumineszenz-Scheinwerfers im Bereich zwischen der ersten und der zweiten Grenzgeschwindigkeit erfolgen oder es kann durch das Fernlicht-Assistenzsystem die Leuchtdichte des Hochlumineszenz-Scheinwerfers von einer höheren auf eine niedrigere Leuchtdichte verringert oder begrenzt werden, wenn die erste Grenzgeschwindigkeit unterschritten wird und/oder wenn im Ausleuchtbereich des Hochlumineszenz-Scheinwerfers ein anderer Verkehrsteilnehmer erkannt wird.

Ein weiteres Kriterium, bei dem die Leuchtdichte des Fahrzeugscheinwerfers 2 von einer höheren (bspw. maximalen) Leuchtdichte auf eine niedrigere Leuchtdichte verringert oder begrenzt werden kann, stellt ein Störungszustand K2 des Kraftfahrzeugs oder einer fahrzeugseitigen Einrichtung dar. Ein solcher Störungszustand K2 kann beispielsweise ein Unfall darstellen. Ein Unfall eines Kraftfahrzeugs kann bspw. mittels eines Crash-Sensors signalisiert werden, wobei bei modernen Systemen auch detektierbar ist, ob das Kraftfahrzeug mit der Frontpartie oder mit der Heckpartie mit einem anderen Verkehrsteilnehmer oder einem Gegenstand kollidiert.

Wird insbesondere eine Kollision im Frontbereich des Kraftfahrzeugs detektiert, könnten bspw. nur die Optiken zur Aufweitung und/oder Ablenkung des Lichtstrahls der Lichtquelle 4 beschädigt sein, die Lichtquelle 4 jedoch selbst noch intakt sein. Hierdurch könnte ein stark gerichteter, sehr starker Lichtstrahl ausgesendet werden, der bspw. die Augen von Unfallhelfern gefährden könnte.

Ein weiteres Beispiel für einen Störungszustand K2 ist der Fall, dass innerhalb von wenigstens einer fahrzeugseitigen Einrichtung (Steuergerät, Elektronik, Sensorik, etc.) des Kraftfahrzeugs ein Fehler (Zustand einer fahrzeugseitigen Einrichtung entspricht nicht dem normalen Betriebszustand) auftritt.

Zumindest bei Störungszuständen, bei denen eine unmittelbare oder mittelbare Auswirkung auf den augensicheren Betrieb des Fahrzeugscheinwerfers 2 gegeben ist oder sein kann, kann aus Sicherheitsgründen vorgesehen sein, dass die Leuchtdichte des Fahrzeugscheinwerfers 2 auf eine niedrigere Leuchtdichte verringert oder begrenzt wird.

Das Steuergerät 3 kann dazu eingerichtet sein, zur Ermittlung eines Störungszustands des Kraftfahrzeugs oder einer fahrzeugseitigen Einrichtung Daten von einer oder mehreren fahrzeugseitigen Einrichtungen (bspw. Sensoreinrichtungen) auszuwerten. Auch kann das Steuergerät 3 dazu eingerichtet sein, die Lichtquelle 4 in Abhängigkeit von der Art des Störungszustands (bspw. bei Detektierung eines Frontalzusammenstoßes, schwerwiegender Fehler in der Elektronik) völlig zu deaktivieren.

Ein Störungszustand K2 des Kraftfahrzeugs oder einer fahrzeugseitigen Einrichtung kann durch ein entsprechendes Signal von einer fahrzeugseitigen Sensoreinrichtung (bspw. Crash-Sensor) an das Steuergerät 3 signalisiert werden. Diese Signalisierung kann mittels einer drahtgebunden oder drahtlosen Übermittlung von der Sensoreinrichtung zu dem Steuergerät 3 erfolgen. Auch ist es selbstverständlich möglich, dass die Einrichtung(en) und das Steuergerät 3 mittels eines Bussystems (bspw. CAN) miteinander verbunden sind.

Auch kann selbstverständlich das Steuergerät 3 die Einrichtung(en) in vorgebbaren Zeitabständen abfragen und deren Signale auswerten. Bei einem erkannten Störungszustand kann ein entsprechender Flag in dem Steuergerät 3 gesetzt werden.

Wurde bei einem Störungszustand durch das Steuergerät 3 die Lichtquelle 4 völlig deaktiviert, kann das Steuergerät 3 auch dazu eingerichtet sein, die Lichtquelle 4 erst wieder zu aktivieren (bspw. wieder eine Stromzufuhr zu der Lichtquelle 4 zuzulassen), wenn an das Steuergerät 3 ein Signal übertragen wurde, mit dem die Beseitigung des Störungszustands signalisiert wird. Dies kann beispielsweise nach einer erfolgreichen Reparatur oder nach Augenscheinnahme des Kraftfahrzeugs mit Hilfe einer drahtgebunden, drahtlosen oder über ein Bussystem erfolgenden Übertragung eines entsprechenden Signals an das Steuergerät 3 mit Hilfe eines Diagnosegeräts oder eines tragbaren oder stationären Computers erfolgen.

Ein weiteres Kriterium, bei dem die Leuchtdichte des Fahrzeugscheinwerfers 2 auf eine niedrigere Leuchtdichte verringert oder begrenzt werden kann, ist ein Wartungsmodus K3 des Fahrzeugs, insbesondere ein Wartungsmodus K3 des Fahrzeugscheinwerfers 2.

Das Kraftfahrzeug kann bspw. bei einem Werkstattaufenthalt durch eine drahtlose, drahtgebundene oder mittels eines Bussystems erfolgende Übertragung eines entsprechenden Signals mit Hilfe eines Diagnosegeräts oder eines tragbaren oder stationären Computers an das Steuergerät 3 in den Wartungsmodus K3 versetzt werden. In diesem Zustand können dann bspw. gefahrlos Einstellarbeiten an dem Fahrzeugscheinwerfer 2 durchgeführt werden. Nach Beendigung der Wartungsarbeiten kann der Wartungsmodus K3 dann wieder durch eine Übertragung eines entsprechenden Signals an das Steuergerät 3 beendet werden.

Ein weiteres Beispiel für ein Versetzen eines Kraftfahrzeugs in einen Wartungsmodus kann beispielsweise während dessen Produktion, bei einer Hauptuntersuchung (bspw. in Deutschland gemäß § 29 StVZO), einem "End-of-Line"-Test oder einem Stellgliedtest gegeben sein, bei denen auch die Funktionsweise und/oder die korrekte Einstellung von Fahrzeugscheinwerfern 2 überprüft wird. Vor der Überprüfung der Fahrzeugscheinwerfer 2 kann das Kraftfahrzeug hierbei in den Wartungsmodus K3 versetzt werden, nach Beendigung der Hauptuntersuchung, des End-of-Line-Tests, dem Stellgliedtest, etc. kann der Wartungsmodus K3 dann wieder beendet werden.

In ähnlicher Weise wie bei einem Störungszustand K2 kann auch ein Wartungsmodus K3 des Kraftfahrzeugs durch Setzen eines entsprechenden Flag in dem Steuergerät 3 eingestellt werden. Das Setzen des Flag kann mittels einer drahtgebunden oder drahtlos erfolgende Übermittlung von einer Diagnoseeinrichtung, einem tragbaren oder stationären Computer zu dem Steuergerät 3 erfolgen. Auch ist es selbstverständlich möglich, dass die Diagnoseeinrichtung, der tragbare oder stationäre Computer und das Steuergerät 3 mittels eines Bussystems (bspw. CAN) miteinander verbunden sind.

Durch Zurücksetzen des Flag bezüglich des Störungszustands K2 und/oder des Wartungsmodus K3 wird dem Steuergerät 3 signalisiert, dass der Störungszustand K2 und/oder der Wartungsmodus K3 wieder beendet ist.

Die Leuchtdichte eines Hochlumineszenz-Scheinwerfers kann auf jede geeignete Art und Weise geregelt werden. Zur Verringerung der Leuchtdichte können bei LED-Scheinwerfern beispielsweise einzelne oder mehrere LEDs ausgeschaltet oder abgedimmt werden. In ähnlicher Weise können Laser-Dioden angesteuert werden. Die Lichtstärke, die von LEDs oder Laser-Dioden abgegeben wird, kann bspw. durch Einstellen der Stromstärke oder mittels Pulsweitenmodulation (PWM) geregelt werden. Die Leuchtdichte eines Hochlumineszenz-Scheinwerfers kann auch durch den Einsatz von Filtern (Filterscheiben; Graufilter) und/oder verstellbare Blenden oder Abschattvorrichtungen verringert oder begrenzt werden.

Gegebenenfalls kann durch einige wenige Versuche ermittelt werden, ob die in dem Steuergerät abgespeicherten Parameter für die gewünschte Steuerung der Leuchtdichte ausreichend sind, insbesondere ob die gewünschte(n) niedrigere(n) Leuchtdichte(n) eingehalten wird/werden. Ebenso kann mittels eines Tests (Eichung) und gegebenenfalls Abspeicherung von geänderten Parametern im Steuergerät ein erfindungsgemäße Verringerung oder Begrenzung der Leuchtdichte sichergestellt werden. Aus Sicherheitsgründen kann vorgesehen sein, dass ein solcher Test (Eichvorgang) in vorgebbaren Zeitabständen oder nach einer vom Kraftfahrzeug zurückgelegten, vorgegebenen Strecke erneut durchzuführen ist.

Die für das erfindungsgemäße System 1 sowie deren vorteilhafte Weiterbildungen und Ausgestaltungen erforderlichen und geeigneten Bauelemente, Baugruppen, Einrichtungen, Vorrichtungen und Elemente sowie deren mögliches Zusammenwirken sind einem Fachmann bekannt, so dass in der vorliegenden Anmeldung hierauf nicht näher eingegangen zu werden braucht.

Zusammenfassend kann man festhalten, dass es Aufgabe der vorliegenden Erfindung ist, einen augensicheren Betrieb von "Hochlumineszenz-Fahrzeugscheinwerfern" 2 zu gewährleisten. Daher ist das mit dem Hochlumineszenz-Fahrzeugscheinwerfer 2 verbundene Steuergerät 3 in vorteilhafter Weise dazu eingerichtet, die niedrigere Leuchtdichte der wenigstens einen Lichtquelle 4 derart zu steuern, dass der Fahrzeugscheinwerfer 2 bei Abstrahlung von sichtbarer Strahlung mit der niedrigeren Leuchtdichte Grenzwerte einhält, bei der eine photobiologische Gefährdung des Auges eines Menschen verhindert wird. Die niedrigere Leuchtdichte eines Fahrzeugscheinwerfers liegt im Bereich kleiner 100 cd/mm² und 60 cd/mm². In der DIN EN 62471 "Photobiologische Sicherheit von Lampen und Lampensystemen" (Stand: März 2009) sind Emissionsgrenzwerte für die Einteilung von Dauerstrich-Lampen in die Risikogruppen "freie Gruppe" sowie die Risikogruppe 1 (geringes Risiko), Risikogruppe 2 (mittleres Risiko) bis Risikogruppe 3 (hohes Risiko) aufgeführt.
Bei einem intakten, in ein Kraftfahrzeug eingebauten Fahrzeugscheinwerfer 2 stellt der Abstand zwischen der wenigstens einen Lichtquelle 4 und der Außenseite der für die sichtbare Strahlung transparenten Wandung 6, der Abdeckscheibe, den denkbar kürzesten Abstand dar, den ein menschliches Auge von der Lichtquelle 4 einnehmen kann.

Daher ist es von Vorteil, wenn das Steuergerät 3 des erfindungsgemäßen Systems 1 dazu eingerichtet ist, die niedrigere Leuchtdichte der wenigstens einen Lichtquelle 4 derart zu steuern oder zu begrenzen, dass der Fahrzeugscheinwerfer 2 bei Abstrahlung von sichtbarer Strahlung mit der niedrigeren Leuchtdichte an jedem beliebigen Punkt der Außenseite der für die sichtbare Strahlung transparenten Wandung 6 die Grenzwerte für Dauerstrich-Lampen gemäß Risikogruppe 2, bevorzugt der Risikogruppe 1 der DIN EN 62471 in der Fassung vom März 2009 einhält.
Bei einer Abstrahlung von sichtbarer Strahlung mit der maximalen Leuchtdichte kann der Fahrzeugscheinwerfer 2 bspw. lediglich die Grenzwerte für Dauerstrich-Lampen gemäß Risikogruppe 3 der DIN EN 62471 in der Fassung vom März 2009 aufweisen.
Durch die hohe Leuchtdichte eines "Hochlumineszenz-Scheinwerfersystems" für ein Kraftfahrzeug kann ein Auge eines Menschen ab einer bestimmten Einwirkungsdauer, ab einem bestimmten Abstand zwischen Lichtquelle 4 und Auge, und/oder in Abhängigkeit von der optischen Ausgangsleistung gefährdet werden.

Durch geeignete Maßnahmen kann gemäß der vorliegenden Erfindung ein sicherer Betrieb eines Fahrzeugscheinwerfers 2 mit einer sehr hohen Lichtleistung gewährleistet werden. Das Ziel, einen Fahrzeugscheinwerfer 2 augensicher zu steuern (zu betreiben), kann bspw. durch Entwicklung eines "Use-Case" erreicht werden, bei dem bestimmte Situationen, die ein besonderes Gefährdungspotential aufweisen, vermieden werden. Dabei können bspw. durch Fahrzeugsensordaten Informationen über einen Fahrzeugzustand aufgenommen und anschließend ausgewertet werden. Insbesondere kann für die Steuerung der Leuchtdichte des Fahrzeugsscheinwerfers 2 auf dynamische Fahrzeugdaten, wie bspw. die Geschwindigkeit, Gierraten, Reglerzustände im elektronischen Stabilitätsprogramm, etc. zurückgegriffen werden.

Erfindungsgemäß kann auch ab Überschreiten einer bestimmten ersten Grenzgeschwindigkeit K1 für den Abstand zwischen Fahrzeugscheinwerfer 2 und einem sich außerhalb des Kraftfahrzeugs befindlichen Menschen ein Mindestabstand angenommen werden. Es ist nicht zu erwarten, dass ab der ersten Grenzgeschwindigkeit K1 dieser Mindestabstand vor dem Fahrzeugscheinwerfer 2 unterschritten wird.

Auch reduziert sich die Einwirkungsdauer auf ein Auge ab Überschreiten der ersten Grenzgeschwindigkeit K1, da eine ständige Positionsänderung des Kraftfahrzeugs zu erwarten ist.

Bei Geschwindigkeiten im Bereich ab der ersten Grenzgeschwindigkeit und bis zu einer zweiten Grenzgeschwindigkeit, die höher ist als die erste Grenzgeschwindigkeit, kann zusätzlich die Leuchtdichte (optische Ausgangsleistung) beispielsweise linear in Abhängigkeit von der Geschwindigkeit bis auf die maximale Ausgangsleistung hochgeregelt werden.

Für den Wartungsfall kann ein Wartungsmodus implementiert sein, bei dem die optische Ausgangsleistung entsprechend reduziert oder begrenzt wird.

Auch kann bei Störungszuständen des Kraftfahrzeugs, bspw. bei einem Unfall, durch Auswertung von Crash Sensordaten und bei Fehlern in einer fahrzeugseitigen Einrichtung (bspw. der Elektronik) die Lichtquelle 4 komplett deaktiviert werden, um das Gefährdungspotential weiter zu minimieren.

## Patentansprüche

1. System (1) mit einem Fahrzeugscheinwerfer (2) zur Beleuchtung eines Umfelds eines Kraftfahrzeugs und einem Steuergerät (3), wobei der Fahrzeugscheinwerfer (2) wenigstens eine Lichtquelle (4), die dazu eingerichtet ist, eine für Menschen sichtbare Strahlung im Wellenlängenbereich von 360 nm bis 830 nm, bevorzugt von 380 nm bis 780 nm, noch bevorzugter von 400 nm bis 760 nm, mit einer Leuchtdichte von 100 cd/mm² oder größer zu erzeugen, und ein Scheinwerfergehäuse (5) aufweist, wobei wenigstens eine Wandung (6) des Scheinwerfergehäuses (5) für die sichtbare Strahlung transparent ist, **dadurch gekennzeichnet, dass**
das Steuergerät (3) dazu eingerichtet ist, in einem Einbauzustand des Fahrzeugscheinwerfers (2) die Leuchtdichte der sichtbaren Strahlung der wenigstens einen Lichtquelle (4) bei
- Unterschreiten einer vorgegebenen ersten Grenzgeschwindigkeit (K1) des Kraftfahrzeugs,
von einer höheren Leuchtdichte von 100 cd/mm² oder größer auf eine niedrigere Leuchtdichte im Bereich von kleiner 100 cd/mm² und 60 cd/mm² zu verringern oder zu begrenzen, wobei das Steuergerät (3) dazu eingerichtet ist, zur des Unterschreitens der ersten Grenzgeschwindigkeit des Kraftfahrzeugs die sich aus dem Tachosignal ergebende Geschwindigkeit mit Daten eines satellitengestützten Navigationssystems, wenigstens eines Beschleunigungssensors und/oder mit Daten eines elektronischen Stabilitätsprogramms abzugleichen und so die Güte der ermittelten Geschwindigkeit des Kraftfahrzeugs zu verbessern oder die Werte des Tachosignals zu verifizieren.

2. System (1) gemäß Anspruch 1,
**dadurch gekennzeichnet, dass**
das Steuergerät (3) dazu eingerichtet ist, die niedrigere Leuchtdichte der sichtbaren Strahlung der wenigstens einen Lichtquelle (4) derart zu steuern oder zu begrenzen, dass der Fahrzeugscheinwerfer (2) bei Abstrahlung von sichtbarer Strahlung mit der niedrigeren Leuchtdichte an jedem beliebigen Punkt der Außenseite der für die sichtbare Strahlung transparenten Wandung (6) die Grenzwerte für Dauerstrich-Lampen gemäß Risikogruppe 2, bevorzugt der Risikogruppe 1 der DIN EN 62471 in der Fassung vom März 2009 einhält.

3. System (1) gemäß Anspruch 1 oder 2,
**dadurch gekennzeichnet, dass**
die wenigstens eine Lichtquelle (4) als Lichterzeugungseinrichtung wenigstens eine lichtemittierende Diode, einen Gasentladungsbrenner und/oder eine Laser-Diode aufweist.

4. System (1) gemäß einem der Ansprüche 1 bis 3,
**dadurch gekennzeichnet, dass**
das Steuergerät (3) dazu eingerichtet ist, bei einer Geschwindigkeit des Kraftfahrzeugs in einem Bereich zwischen der ersten Grenzgeschwindigkeit und einer zweiten Grenzgeschwindigkeit, die höher ist als die erste Grenzgeschwindigkeit, die Leuchtdichte der sichtbaren Strahlung der wenigstens einen Lichtquelle (4) in Abhängigkeit der Geschwindigkeit zu regeln, derart, dass die Leuchtdichte bei einer höheren Geschwindigkeit größer ist als bei einer niedrigeren Geschwindigkeit und ab einem Erreichen der zweiten Grenzgeschwindigkeit eine maximale Leuchtdichte gegeben ist.

5. Verfahren zum Steuern eines Fahrzeugscheinwerfers (2) zur Beleuchtung eines Umfelds eines Kraftfahrzeugs mit einem Steuergerät (3), wobei der Fahrzeugscheinwerfer (2) wenigstens eine Lichtquelle (4), die dazu eingerichtet ist, für einen Menschen sichtbare Strahlung im Wellenlängenbereich von 360 nm bis 830 nm, bevorzugt von 380 nm bis 780 nm, noch bevorzugter von 400 nm bis 760 nm, mit einer Leuchtdichte von 100 cd/mm² oder größer zu erzeugen, und ein Scheinwerfergehäuse (5) aufweist, wobei wenigstens eine Wandung (6) des Scheinwerfergehäuses (5) die sichtbare Strahlung transparent ist,
mit den Schritten
Ermitteln der Geschwindigkeit des Kraftfahrzeugs, wobei zur Ermittlung der Geschwindigkeit des Kraftfahrzeugs die sich aus dem Tachosignal ergebende Geschwindigkeit mit Daten eines satellitengestützten Navigationssystems, wenigstens eines Beschleunigungssensors und/oder mit Daten eines elektronischen Stabilitätsprogramms abgeglichen wird und so die Güte der ermittelten Geschwindigkeit des Kraftfahrzeugs verbessert oder die Werte des Tachosignals verifiziert werden, und
Verringern oder Begrenzen der Leuchtdichte der sichtbaren Strahlung der wenigstens einen Lichtquelle (4) durch das Steuergerät von einer höheren Leuchtdichte von 100 cd/mm² oder größer auf eine niedrigere Leuchtdichte im Bereich von kleiner 100 cd/mm² und 60 cd/mm², wenn
- eine vorgegebene erste Grenzgeschwindigkeit (K1) des Kraftfahrzeugs unterschritten wird.

6. Verfahren gemäß Anspruch 5,
wobei die niedrigere Leuchtdichte der sichtbaren Strahlung der wenigstens einen Lichtquelle (4) derart verringert oder begrenzt wird, dass der Fahrzeugscheinwerfer (2) bei Abstrahlung von sichtbarer Strahlung mit der niedrigeren Leuchtdichte an jedem beliebigen Punkt der Außenseite der für die sichtbare Strahlung transparenten Wandung (6) die Grenzwerte für Dauerstrich-Lampen gemäß Risikogruppe 2, bevorzugt der Risikogruppe 1 der DIN EN 62471 in der Fassung vom März 2009 einhält.

## Claims

1. System (1) having a vehicle headlight (2) for illuminating a surrounding environment of a motor vehicle and a control device (3), wherein the vehicle headlight (2) has at least one light source (4) which is set up to generate radiation visible for humans in the wavelength range from 360 nm to 830 nm, preferably from 380 nm to 780 nm, more preferably from 400 nm to 760 nm, having a luminance of 100 cd/mm² or greater, and a headlight housing (5), wherein at least one wall (6) of the headlight housing (5) is transparent for the visible radiation, **characterised in that**
the control device (3) is set up to reduce or to limit the luminance of the visible radiation of the at least one light source (4) in a fitted state of the vehicle headlight (2) in the case of
- falling below a predetermined first speed limit (K1) of the motor vehicle,
from a higher luminance of 100 cd/mm² or greater to a lower luminance in the range of less than 100 cd/mm² and 60 cd/mm², wherein the control device (3) is set up to align the speed resulting from the speed signal with data of a satellite-based navigation system, at least one acceleration sensor and/or with data of an electronic stability programme and therefore to improve the quality of the determined speed of the motor vehicle or to verify the values of the speed signal.

2. System (1) according to claim 1, **characterised in that** the control device (3) is set up to control or to limit the lower luminance of the visible radiation of the at least one light source (4) in such a way that, in the case of emission of visible radiation having the lower luminance, the vehicle headlight (2) complies with the limit values for continuous wave lamps according to risk group 2, preferably the risk group 1 of the DIN EN 62471 in the version from March 2009 at any point of the outer side of the wall (6) which is transparent for visible radiation.

3. System (1) according to claim 1 or 2, **characterised in that** the at least one light source (4) has at least one light-emitting diode, a gas-discharge burner and/or a laser diode as a light generating device.

4. System (1) according to one of claims 1 to 3, **characterised in that**, in the case of a speed of the motor vehicle in a range between the first speed limit and a second speed limit which is higher than the first speed limit, the control device (3) is set up to regulate the luminance of the visible radiation of the at least one light source (4) depending on the speed in such a way that the luminance is greater in the case of a higher speed than in the case of a lower speed and a maximum luminance is provided as of an achieving of the second speed limit.

5. Method for controlling a vehicle headlight (2) for illuminating a surrounding environment of a motor vehicle having a control device (3), wherein the vehicle headlight (2) has at least one light source (4) which is set up to generate radiation visible for a human in the wavelength range from 360 nm to 830 nm, preferably from 380 nm to 780 nm, more preferably from 400 nm to 760 nm, having a luminance of 100 cd/mm² or greater, and a headlight housing (5), wherein at least one wall (6) of the headlight housing (5) is transparent for the visible radiation, having the steps
determining the speed of the motor vehicle, wherein to determine the speed of the motor vehicle, the speed resulting from the speed signal is aligned with data of a satellite-based navigation system, at least one acceleration sensor and/or with data of an electronic stability programme, and therefore improves the quality of the determined speed of the motor vehicle or the values of the speed signal are verified, and
reducing or limiting the luminance of the visible radiation of the at least one light source, (4) using the control device, from a higher luminance of 100 cd/mm² or greater to a lower luminance in the range of less than 100 cd/mm² and 60 cd/mm², if
- a predetermined first speed limit (K1) of the motor vehicle is fallen below.

6. Method according to claim 5, wherein the lower luminance of the visible radiation of the at least one light source (4) is reduced or limited in such a way that, in the case of emission of visible radiation having the lower luminance, the vehicle headlight (2) complies with the limit values for continuous wave lamps according to risk group 2, preferably the risk group 1 of the DIN EN 62471 in the version from March 2009 at any point of the outer side of the wall (6) which is transparent for visible radiation.

## Revendications

1. Système (1) avec un projecteur de véhicule (2) pour l'éclairage d'un environnement d'un véhicule automobile et un appareil de commande (3), dans lequel le projecteur de véhicule (2) présente au moins une source de lumière (4) qui est conçue pour générer un rayonnement visible pour l'homme dans la gamme de longueur d'onde de 360 nm à 830 nm, de préférence de 380 nm à 780 nm, de manière davantage préférée de 400 nm à 760 nm, avec une luminance de 100 cd/mm² ou plus, et un boîtier de projecteur (5), dans lequel au moins une paroi (6) du boîtier de projecteur (5) est transparente au rayonnement visible,
**caractérisé en ce que**
l'appareil de commande (3) est conçu pour réduire ou limiter, dans un état d'intégration du projecteur de véhicule (2), la luminance du rayonnement visible de l'au moins une source de lumière (4) en cas de
- non-atteinte d'une première vitesse limite (K1) prédéfinie du véhicule automobile,
d'une luminance plus élevée de 100 cd/mm² ou plus à une luminance plus faible dans la plage inférieure à 100 cd/mm² et 60 cd/mm², dans lequel
l'appareil de commande (3) est conçu pour ajuster, pour la non-atteinte de la première vitesse limite du véhicule automobile, la vitesse résultant du signal tachymétrique avec des données d'un système de navigation par satellite, au moins d'un capteur d'accélération et/ou avec des données d'un programme de stabilité électronique et améliorer ainsi la qualité de la vitesse déterminée du véhicule automobile ou vérifier les valeurs du signal tachymétrique.

2. Système (1) selon la revendication 1,
**caractérisé en ce que**
l'appareil de commande (3) est conçu pour commander ou limiter la luminance plus faible du rayonnement visible de l'au moins une source de lumière (4) de telle manière que le projecteur de véhicule (2) contienne, en cas d'émission de rayonnement visible avec la luminance plus faible en chaque point quelconque du côté extérieur de la paroi (6) transparente au rayonnement visible, les valeurs limites pour des lampes à ondes continues selon le groupe de risque 2, de préférence le groupe de risque 1 de la norme DIN EN 62471 dans la version de mars 2009.

3. Système (1) selon la revendication 1 ou 2,
**caractérisé en ce que**
l'au moins une source de lumière (4) présente comme dispositif de génération de lumière au moins une diode émettant de la lumière, un brûleur à décharge de gaz et/ou une diode laser.

4. Système (1) selon l'une des revendications 1 à 3,
**caractérisé en ce que**
l'appareil de commande (3) est conçu pour réguler, pour une vitesse du véhicule automobile dans une plage entre la première vitesse limite et une seconde vitesse limite qui est plus élevée que la première vitesse limite, la luminance du rayonnement visible de l'au moins une source de lumière (4) en fonction de la vitesse de telle manière que la luminance soit plus grande pour une vitesse plus élevée que pour une vitesse plus faible et à partir d'une atteinte de la seconde vitesse limite une luminance maximale soit donnée.

5. Procédé de commande d'un projecteur de véhicule (2) pour l'éclairage d'un environnement d'un véhicule automobile avec un appareil de commande (3), dans lequel le projecteur de véhicule (2) présente au moins une source de lumière (4) qui est conçue pour générer un rayonnement visible pour l'homme dans la gamme de longueur d'onde de 360 nm à 830 nm, de préférence de 380 nm à 780 nm, de manière davantage préférée 400 nm à 760 nm, avec une luminance de 100 cd/mm² ou plus, et un boîtier de projecteur (5), dans lequel au moins une paroi (6) du boîtier de projecteur (5) est transparente au rayonnement visible,
avec les étapes consistant à
déterminer la vitesse du véhicule automobile, dans lequel pour déterminer la vitesse du véhicule automobile, la vitesse résultant du signal tachymétrique est ajustée avec des données d'un système de navigation par satellite, au moins d'un capteur d'accélération et/ou avec des données d'un programme de stabilité électronique et ainsi la qualité de la vitesse déterminée du véhicule automobile est améliorée ou les valeurs du signal tachymétrique sont vérifiées, et
réduire ou limiter la luminance du rayonnement visible de l'au moins une source de lumière (4) par l'appareil de commande d'une luminance plus élevée de 100 cd/mm² ou plus à une luminance plus faible dans la plage de moins de 100 cd/mm² et 60 cd/mm² si
- une première vitesse limite (K1) prédéfinie du véhicule automobile n'est pas atteinte.

6. Procédé selon la revendication 5,
dans lequel la luminance plus faible du rayonnement visible de l'au moins une source de lumière (4) est réduite ou limitée de telle manière que le projecteur de véhicule (2) contienne, en cas d'émission de rayonnement visible avec la luminance plus faible en chaque point quelconque du côté extérieur de la paroi (6) transparente au rayonnement visible, les valeurs limites pour des lampes à ondes continues selon le groupe de risque 2, de préférence le groupe de risque 1 de la norme DIN EN 62471 dans la version de mars 2009.
